# EUROPÄISCHE PATENTSCHRIFT

(11) **EP 3 865 531 B1**
(45) Veröffentlichungstag und Bekanntmachung des Hinweises auf die Patenterteilung: **28.05.2025**
(21) Anmeldenummer: 20157315.1
(22) Anmeldetag: 14.02.2020
(51) Int. Cl.: C08G 77/46, C08L 83/06

(54) **SIOC-VERKNÜPFTE, LINEARE POLYDIMETHYLSILOXAN-POLYOXYALKYLEN-BLOCKCOPOLYMERE**
SIOC-LINKED, LINEAR POLYDIMETHYLSILOXANE POLYOXYALKYLENE BLOCK COPOLYMERS
COPOLYMÈRES BLOCS POLYDIMÉTHYLSILOXANE-POLYOXYALKYLÈNES LINÉAIRES À LIAISONS SIOC

(43) Veröffentlichungstag der Anmeldung: 18.08.2021
(73) Patentinhaber: Evonik Operations GmbH, 45128 Essen (DE)
(72) Erfinder: KNOTT, Wilfried, 45355 Essen (DE); SCHNELL, Dagmar, 45289 Essen (DE); DUDZIK, Horst, 45326 Essen (DE)
(74) Vertreter: Evonik Patent Association

(56) Entgegenhaltungen:
- EP-A2- 1 935 923
- EP-B1- 1 935 922

## Beschreibung

Die Erfindung betrifft ein Verfahren zur Herstellung von SiOC-verknüpften, linearen Polydimethylsiloxan-Polyoxyalkylen-Blockcopolymeren mit sich wiederholenden (AB)-Einheiten.

Bei der Herstellung von Polyurethanweichschäumen können dem Gemisch der Rohstoffe Polysiloxan-Polyoxyalkylen-Blockmischpolymerisate zugesetzt werden, welche vielfältige Aufgaben haben und u.a. die Ausbildung eines gleichmäßigen Porengefüges ermöglichen und den gebildeten Schaum bis zur Beendigung der Reaktion stabilisieren. Jedoch sind nicht alle Polysiloxan-Polyoxyalkylen-Blockmischpolymerisate in gleicher Weise geeignet. Um als Polyurethan-Schaumstabilisatoren brauchbar zu sein, müssen die Polyoxyalkylenblöcke und der Polysiloxanblock der Blockmischpolymerisate in einem ausgewogenen Verhältnis vorliegen, wobei auch der Aufbau der beiden Blöcke von großer Bedeutung ist.

Die EP1935922 B1 lehrt einen Zugang zu hochmolekularen linearen SiOC-verknüpften Polydimethylsiloxan-Polyoxyalkylen-Blockcopolymeren mit sich wiederholenden (AB)-Einheiten durch die Umsetzung von Polyetherdiolen mit einem stöchiometrischen Überschuss a,ω-Dihydrogen-polydimethylsiloxanen in Gegenwart einer oder mehrerer Elementverbindungen der III. Haupt- und/oder der 3. Nebengruppe als Katalysator, wobei man die Reaktion nach vollständig erfolgter Umsetzung der Alkoholkomponente so lange weiterführt, bis keine =Si(H)-Gruppen gasvolumetrisch mehr nachweisbar sind. Die gasvolumetrische SiH-Wert-Bestimmung erfolgt durch die alkoholatinduzierte Zersetzung einer Probe nach etablierten Verfahren.

So attraktiv dieses dehydrogenative Verfahren zur SiOC-Verknüpfung gerade in Bezug auf die Vermeidung flüssiger und/ oder fester Nebenprodukte auch ist, so stellen sowohl der Einsatz kostspieliger und toxischer Katalysatoren, wie zum Beispiel Tris(pentafluorophenyl)-boran, als auch die sichere Handhabung und Entsorgung des bei der Synthese entstehenden Wasserstoffgases Nachteile dieser Technologie dar, die der Überwindung harren.

Die EP1935922 B1 offenbart ein Verfahren zur Herstellung von SiOC-verknüpften linearen Polydimethylsiloxan-Polyoxyalkylen-Blockcopolymeren mit sich wiederholenden (AB)-Einheiten durch die Umsetzung von Polyetherdiolen mit einem stöchiometrischen Überschuss von Dihydrogenpolydimethylsiloxanen in Gegenwart eines oder mehrerer tertiärer Amine als Katalysator.

In der europäischen Patentanmeldung EP 3 611 214 A1 wird vor diesem ganz allgemeinen Hintergrund ein einfaches, ökonomisch sinnvolles Verfahren beschrieben, mit dem SiOC-verknüpfte, lineare Polydimethylsiloxan-Polyoxyalkylen-Blockcopolymere mit verbesserten Eigenschaften herstellbar sind. In der eben genannten Schrift wurde gefunden, dass man lineare SiOC-verknüpfte Polydimethylsiloxan-Polyoxyalkylen-Blockcopolymere mit sich wiederholenden (AB)-Einheiten und hierbei ganz besonders auch derjenigen vom hochmolekularen Typ herstellen kann, indem man endäquilibrierte lineare, trifluormethansulfonsaure α,ω-Acetoxy-gruppen tragende Polydimethylsiloxane mit Polyetherdiolen zur Umsetzung bringt, wobei man diese Umsetzung durch Hinzufügen einer festen, flüssigen oder gasförmigen Base vornimmt, gegebenenfalls unter Einsatz inerter Lösungsmittel.

Im Rahmen der hier vorliegenden Erfindung wurde nun festgestellt, dass der Molmassenmassenaufbau gegenüber der Lehre der europäischen Patentanmeldung EP 3 611 214 A1 überraschenderweise sogar noch weiter verbessert werden kann und zwar durch den Einsatz entsprechend vorbehandelter α,ω-Diacetoxypolydimethylsiloxane.

Somit besteht die konkret zu lösende technische Aufgabe auch der hier vorliegenden Erfindung wiederum darin, ein Verfahren zur Herstellung linearer SiOC-verknüpfter Polydimethylsiloxan-Polyoxyalkylen-Blockcopolymerer und hierbei ganz besonders auch derjenigen vom hochmolekularen Typ hervorzubringen, das ebenfalls die in der europäischen Patentanmeldung EP 3 611 214 A1 diskutierten Schwierigkeiten des bekannten Standes der Technik, wie z.B. in EP1935922 B1 und US 3,836,560 überwindet.

Diese Aufgabe wird gelöst vom Gegenstand der Erfindung.

Der Gegenstand der Erfindung ist ein Verfahren zur Herstellung von SiOC-verknüpften, linearen Polydimethylsiloxan-Polyoxyalkylen-Blockcopolymeren mit sich wiederholenden (AB)-Einheiten, umfassend folgende Schritte:
(a) Vorbehandlung saurer, vorzugsweise supersaurer, vorzugsweise trifluormethansulfonsaurer, endäquilibrierter α,ω-Diacetoxypolydimethylsiloxane mit einer Base und gegebenenfalls anschließende destillative Reinigung der zuvor mit Base vorbehandelten α,ω-Diacetoxy-polydimethylsiloxane
(b) Umsetzung der aus (a) resultierenden α,ω-Diacetoxypolydimethylsiloxane mit Polyetherdiolen in Gegenwart einer festen, flüssigen oder gasförmigen Base, gegebenenfalls unter Einsatz inerter Lösungsmittel.

Offenbart werden ebenfalls SiOC-verknüpfte, lineare Polydimethylsiloxan-Polyoxyalkylen-Blockcopolymere mit sich wiederholenden (AB)-Einheiten, hergestellt nach dem erfindungsgemäßen Verfahren, sowie deren Verwendung als grenzflächenaktive Additive zur Herstellung von Polyurethan-Etherschäumen.

Zuerst wird das erfindungsgemäße Verfahren genau erläutert.

Das erfindungsgemäße Verfahren sieht die Vorbehandlung saurer, vorzugsweise supersaurer, vorzugsweise trifluormethansulfonsaurer, endäquilibrierter α,ω-Diacetoxypolydimethylsiloxane mit einer Base vor und gegebenenfalls eine anschließende destillative Reinigung der zuvor mit Base vorbehandelten α,ω-Diacetoxy-polydimethylsiloxane.

Die einzusetzenden sauren, vorzugsweise supersauren, insbesondere trifluormethansulfonsauren, endäquilibrierten α,ω-Diacetoxypolydimethylsiloxane sind z.B. dadurch erhältlich, dass man zyklische Siloxane, insbesondere umfassend D₄ und/ oder D₅, unter Einsatz von Säure, vorzugsweise Supersäure, insbesondere Trifluormethansulfonsäure als Katalysator mit Acetanhydrid umsetzt. Die Säure, vorzugsweise Supersäure, insbesondere Trifluormethansulfonsäure wird dabei vorzugsweise in Mengen von 0,1 bis 0,3 Massenprozent, bezogen auf die aus Acetanhydrid und zyklischen Siloxanen bestehende Reaktionsmatrix, eingesetzt. Die eingesetzten Säuren sind vorzugsweise Supersäuren. Supersäuren sind dem Fachmann wohlbekannt, es handelt sich hierbei im Allgemeinen um Säuren, die stärker als konzentrierte 100-prozentige Schwefelsäure (H₂SO₄: pKₛ-Wert = -3,0) sind. Zur Quantifizierung der Säurestärke wird im Allgemeinen die Hammettsche Aciditätsfunktion verwendet. Besonders bevorzugt sind Supersäuren, die einen pKa-Wert kleiner -3,0 aufweisen, vorzugsweise fluorierte und/ oder perfluorierte Sulfonsäuren, Fluorsulfonsäure HSO₃F, Fluor-Antimonsäure HSbF₆, Perfluorbutansulfonsäure C₄F₉SO₃H und ganz besonders bevorzugt Trifluormethansulfonsäure CF₃SO₃H. Die Umsetzung wird vorzugsweise im Temperaturbereich von 140 bis 160°C und vorzugsweise in einem Zeitraum von 4 bis 8 Stunden durchgeführt. Besonders geeignete trifluormethansulfonsaure, äquilibrierte α,ω-Diacetoxysiloxane und deren Herstellung sind z.B. in EP18189075.7 und EP18189074.0 beschrieben.

Zur Vorhandlung der sauren, vorzugsweise supersauren, vorzugsweise trifluormethansulfonsauren, endäquilibrierten α,ω-Diacetoxypolydimethylsiloxane kann prinzipiell jede Base eingesetzt werden. Bevorzugte erfindungsgemäß einzusetzende einfache Basen sind zum Beispiel Alkali- bzw. ErdalkaliCarbonate und/ oder -Hydrogencarbonate und/ oder gasförmiger Ammoniak und/ oder Amine. Der bekannten Kondensationsneigung von Acetoxysiloxanen Rechnung tragend, sind dabei ganz besonders bevorzugt solche Basen, die auf Grund ihrer chemischen Zusammensetzung kein Wasser in das Reaktionssystem eintragen. Somit haben wasserfreie Carbonate vor Hydrogencarbonaten und Hydratwasser-freie vor Hydratwasser-enthaltenden Basen jeweils den Vorzug. Erfindungsgemäß ganz besonders bevorzugt ist allerdings die Verwendung gasförmigen Ammoniaks als Base. Dies entspricht einer ganz besonders bevorzugten Ausführungsform.

Es entspricht einer besonders bevorzugten Ausführungsform, wenn die Vorbehandlung des sauren endäquilibrierten α,ω-Diacetoxypolydimethylsiloxans in Schritt (a) mit Base, insbesondere Ammoniak, im Temperaturbereich von 0°C bis 50°C, bevorzugt zwischen 15°C bis 35°C durchgeführt wird. Vorzugsweise wird die molare Mindestmenge eingesetzter Base, insbesondere Ammoniak, so bemessen, dass sie 1/ 20 bis 1/8 der molaren Menge Si-gebundener Acetoxygruppen im α,ω-Diacetoxypolydimethylsiloxan entspricht. Einhergehend mit dieser Basenbehandlung wird sichergestellt, dass die im System vorhandene Säure, insbesondere Trifluormethansulfonsäure, neutralisiert ist.

Nach der Vorbehandlung der sauren, vorzugsweise supersauren, insbesondere trifluormethansulfonsauren, endäquilibrierten α,ω-Diacetoxypolydimethylsiloxane mit einer Base kann noch eine Aufreinigung erfolgen. Beispielsweise können etwaige Feststoffe abgetrennt werden, z.B. durch Filtration. Insbesondere kann gewünschten Falls eine destillative Reinigung des zuvor Base behandelten α,ω-Diacetoxy-polydimethylsiloxans erfolgen.

Insbesondere die erfindungsgemäße Vorbehandlung der sauren, vorzugsweise supersauren, insbesondere trifluormethansulfonsauren, endäquilibrierten α,ω-Diacetoxypolydimethylsiloxane mit einer Base unterscheidet den hier vorliegenden Gegenstand vom Gegenstand der europäischen Patentanmeldung EP 3 611 214 A1. Diese erfindungsgemäße Vorbehandlung leistet insbesondere einen weiteren Beitrag für das angestrebte Erreichen einer hochmolekularen SiOC-verknüpften A(BA)n-Polyethersiloxanstruktur.

In dem erfindungsgemäßen Verfahren erfolgt die Umsetzung der aus Schritt (a) resultierenden α,ω-Diacetoxypolydimethylsiloxane mit Polyetherdiolen in Gegenwart einer festen, flüssigen oder gasförmigen Base, gegebenenfalls unter Einsatz inerter Lösungsmittel.

Bevorzugte in Schritt (b) erfindungsgemäß einzusetzende Basen entsprechen den vorgenannten, vgl. Schritt (a). Erfindungsgemäß ganz besonders bevorzugt ist ebenfalls die Verwendung gasförmigen Ammoniaks als Base. Die Menge der in Schritt (b) in das Reaktionssystem eingetragenen festen, flüssigen oder gasförmigen Base wird gemäß einer bevorzugten Ausführungsform der Erfindung so bemessen, dass sie mindestens stöchiometrisch bezogen auf die im erfindungsgemäß behandelten Acetoxysiloxan vorhandenen Si-gebundenen Acetoxygruppen, bezogen auf diese besonders bevorzugt überstöchiometrisch gewählt wird.

Die Reaktion wird gemäß einer bevorzugten Ausführungsform der Erfindung in Schritt (b) bei Temperaturen zwischen 20 bis 120°C, vorzugsweise zwischen 20 und 70°C über die Dauer von 1 bis 10, vorzugsweise mindestens über die Dauer von 1 bis 3 Stunden durchgeführt.

Wie bereits aus der europäischen Patentanmeldung EP 3 611 214 A1 bekannt, ist auch die Qualität des eingesetzten, sauren, vorzugsweise supersauren, insbesondere trifluormethansulfonsauren α,ω-Diacetoxypolydimethylsiloxans für das Erreichen einer hochmolekularen SiOC-verknüpften A(BA)n-Polyethersiloxanstruktur von entscheidender Bedeutung.

So ist nämlich entsprechend der europäischen Patentanmeldung EP 3 611 214 A1 ein perfektes Äquilibrierergebnis der eingesetzten, sauren, vorzugsweise supersauren, insbesondere trifluormethansulfonsauren α,ω-Diacetoxypolydimethylsiloxan für den Aufbau hochmolekularer SiOC-verknüpfter A(BA)n-Polyethersiloxanstruktur anzustreben. Mit dem Begriff "endäquilibriert" ist daher gemeint, dass das Äquilibriergleichgewicht erreicht worden ist, das sich bei einer Temperatur von 23°C und einem Druck von 1013,25 hPa einstellt. Als Indikator für das Erreichen des zuvor genannten Äquilibriergleichgewichtes wird der gaschromatographisch bestimmte Gesamtcylengehalt definiert als die Summe der D₄-, D₅-, D₆-Gehalte bezogen auf die Siloxanmatrix und festgestellt nach der Derivatisierung der α,ω-Diacetoxypolydimethylsiloxane zu den entsprechenden α,ω-Diisopropoxy-polydimethylsiloxanen herangezogen. Die Derivatisierung zu den α,ω-Diisopropoxypolydimethylsiloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxy-polydimethylsiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)). Erfindungsgemäß soll der darin enthaltene Gesamtcyclengehalt definiert als Summe der Gehaltsanteile der zyklischen Siloxane umfassend D₄, D₅ und D₆ bezogen auf die Siloxanmatrix bevorzugt kleiner 13 Gewichtsprozent, besonders bevorzugt kleiner 12 Gewichtsprozent an der aus α,ω-Diisopropoxypolydimethylsiloxanen bestehenden Siloxanmatrix aufweisen.

Äquilibrierte α,ω-Diacetoxypolydimethylsiloxane dieser Qualität, also endäquilibrierte α,ω-Diacetoxypolydimethylsiloxane, können sehr vorteilhaft, das heißt auch nach sehr kurzer Reaktionszeit, durch die Umsetzung von Siloxancyclen (insbesondere umfassend D₄ und/oder D₅) mit Acetanhydrid in Gegenwart von Trifluormethansulfonsäure und Essigsäure hergestellt werden. Essigsäure wird dabei vorzugsweise in Mengen von 0,4 bis 3,5 Gewichtsprozent, bevorzugt 0,5 bis 3 Gewichtsprozent, weiter bevorzugt 0,8 bis 1,8 Gewichtsprozent, besonders bevorzugt in Mengen von 1,0 bis 1,5 Gewichtsprozent bezogen auf die Reaktionsmatrix bestehend aus Acetanhydrid und zyklischen Siloxanen hinzugesetzt. Die Bereitstellung von erfindungsgemäß einsetzbaren trifluormethansulfonsauren, endäquilibrierten α,ω-Diacetoxypolydimethylsiloxanen wird exemplarisch in Beispiel 1 der europäischen Patentanmeldung EP 3 611 214 A1 beschrieben.

Die Erfinder haben im Rahmen der vorliegenden Erfindung festgestellt, dass eine Vorbehandlung der sauren, vorzugsweise supersauren, vorzugsweise trifluormethansulfonsauren, endäquilibrierten α,ω-Diacetoxypolydimethylsiloxane mit einer Base vor der Folgeumsetzung mit Polyetherdiolen zu besonders guten Produktmischungen führt, insbesondere im Hinblick auf den erzielbaren Polymerisationsgrad.

Da der Polymerisationsgrad des linearen Polydimethylsiloxan-Polyoxyalkylen-Blockcopolymeren insbesondere für dessen tensidische Wirksamkeit in Polyurethan-Etherschäumen qualitätsdeterminierend ist, kommt der Reaktionsverfolgung eine wichtige Rolle zu. Erfindungsgemäß bewährt hat sich hierbei die Methode, über die Reaktionszeit hinweg Proben aus der Reaktionsmatrix zu ziehen, die man dann zum Beispiel mit Hilfe der ²⁹Si-NMR und/ oder ¹³C-NMR-Spektroskopie analysiert. Die Abnahme des Integrals der für die Präsenz von Acetoxydimethylsiloxygruppen - OSi(CH₃)₂OCOCH₃ charakteristischen Signallagen geht mit dem beabsichtigten Molmassenaufbau des A(BA)n strukturierten Copolymers einher und ist ein verlässlicher Indikator für den erzielten Reaktionsumsatz.

Für den Fachmann unvorhersehbar werden auf diese Weise Strukturen erhalten, die als Stabilisatoren bei der Herstellung von Polyurethanschäumen (PU-Schäume), insbesondere PU-Weichschäumen, sprunghaft bessere Eigenschaften aufweisen.

Ein Gegenstand der vorliegenden Erfindung ist daher ein Verfahren zur Herstellung von SiOC-verknüpften, linearen Polydimethylsiloxan-Polyoxyalkylen-Blockcopolymeren mit sich wiederholenden (AB)-Einheiten durch Umsetzung von Polyetherdiolen mit erfindungsgemäß vorbehandelten α,ω-Diacetoxypolydimethylsiloxanen, wobei man die Umsetzung durch Hinzufügen einer festen, flüssigen oder gasförmigen Base vornimmt und das gegebenenfalls unter Einsatz inerter Lösungsmittel.

Gemäß einer bevorzugten Ausführungsform der Erfindung werden als inerte Lösungsmittel Alkane, Cycloalkane, Alkylaromaten, endverschlossene Polyether und/oder Emollientester, wie den von Laurinsäure, Myristinsäure, Palmitinsäure, Stearinsäure, Ölsäure, Isostearinsäure, Ricinolsäure, und Behenilsäure hergeleiteten Estern kombiniert mit Cetyl-, Stearyl-, Isostearyl-, Oleyl-, Octyldodecyl-, Myristyl- und Behenyl-Alkohol und/oder Glyzerin, vorzugsweise Myristylmyristat, verwendet.

Die Siloxanblöcke (A) der erfindungsgemäß resultierenden Blockcopolymeren sind gemäß einer bevorzugten Ausführungsform der Erfindung lineare Siloxanpolymere oder Ketten mit sich wiederholenden Siloxaneinheiten, die durch die Formel (-R₂SiO-), wobei R = Methyl- ist, dargestellt werden können.

Der Polyoxyalkylenblock (B) der erfindungsgemäß resultierenden linearen Blockcopolymeren ist gemäß einer bevorzugten Ausführungsform der Erfindung ein Oxyalkylenpolymer enthaltend die sich wiederholenden Oxyalkyleneinheiten, hier insbesondere die Oxyethylen- und Propenyloxyeinheiten.

Das gewichtsmittlere Molekulargewicht jedes Siloxanblocks (A) liegt gemäß einer bevorzugten Ausführungsform zwischen 650 bis 6500 g/mol, vorzugsweise 800 bis 1500 g/mol, besonders bevorzugt bei 1000 bis 1200 g/mol.

Das gewichtsmittlere Molekulargewicht jedes Polyoxyalkylenblocks der erfindungsgemäß hergestellten Mischpolymeren liegt gemäß einer bevorzugten Ausführungsform zwischen 600 und 10.000 g/mol, vorzugsweise 1.000 bis 5.000 g/mol.

Die Größe der einzelnen Oxyalkyleneinheiten oder Siloxanblöcke ist nicht notwendigerweise einheitlich, sondern kann innerhalb der angegebenen Grenzen beliebig variieren.

Die einzelnen Polyoxyalkyleneinheiten sind gemäß einer bevorzugten Ausführungsform der Erfindung Additionsprodukte aus mindestens einem Oxyalkylenmonomer, ausgesucht aus der Gruppe Ethylenoxid, Propylenoxid, Butylenoxid Tetrahydrofuran, vorzugsweise Mischprodukte aus mindestens zwei Monomereinheiten, insbesondere aus Ethylenoxid und Propylenoxid.

Die Polyoxyalkylenblöcke bestehen gemäß einer bevorzugten Ausführungsform im Wesentlichen aus Oxyethyleneinheiten oder Oxypropyleneinheiten, bevorzugt sind gemischte Oxyethylen- und Oxypropyleneinheiten mit einem Oxyethylenanteil von etwa 30 bis 70 Gewichtsprozent und 70 bis 30 Gewichtsprozent Oxypropylenanteil bezogen auf den Gesamtgehalt an Oxyalkyleneinheiten im Block.

Gemäß einer bevorzugten Ausführungsform beträgt der gesamte Siloxanblockanteil (A) im Copolymer zwischen 20 und 50 Gewichtsprozent, vorzugsweise 25 bis 40 Gew.-%, und der Anteil der Polyoxyalkylenblöcke zwischen 80 und 50 Gew.-%. Das Blockcopolymer weist gemäß einer bevorzugten Ausführungsform ein mittleres gewichtsgemitteltes Molekulargewicht Mw von mindestens 10.000 g/mol bis ca. 160.000 g/mol, vorzugsweise 15.000 g/mol bis ca. 100.000 g/mol, insbesondere 20.000 g/mol bis ca. 36.000 g/mol auf. Die Ermittlung der mittleren Molekulargewichte basiert auf den bekannten Methoden der GPC-Analytik, wobei Polystyrol als Standard verwendet wird.

Das molare Verhältnis von a,ω-Diacetoxysiloxanen zu Polyetherdiolen liegt gemäß einer bevorzugten Ausführungsform im Bereich von 0,90 bis 1,10 ,bevorzugt im Bereich 0,95 bis 1,05 besonders bevorzugt im Bereich 0,99 bis 1,01. Für den Fachmann erschließt sich ohne Weiteres, dass sich der erzielbare Polymerisationsgrad an das Erreichen einer nahezu perfekten Stöchiometrie der Reaktanden knüpft.

Das erfindungsgemäße Verfahren wird gemäß einer bevorzugten Ausführungsform ausgeführt durch Umsetzung von erfindungsgemäß vorbehandelten Acetoxy-Si-Einheiten enthaltenden Polyorganosiloxanen der allgemeinen Formel (II) 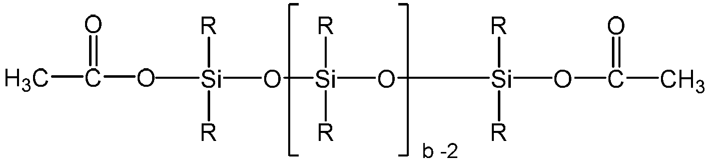 worin bedeuten:
R : Methylreste,
b: 8 bis 80, vorzugsweise 10 bis 50, besonders bevorzugt 10 bis 25,
mit wenigstens einem Alkohol, der ausgewählt ist aus der Gruppe der Polyetherdiole mit der allgemeinen Formel (III)

   HO- (CₙH₍₂ₙ₋ₘ₎R ¹ₘO-)ₓ-H (III)
enthalten, worin
R¹ : Methyl
n : 2 bis 4,
m : 0 oder 1,
x : einen Wert von 1 bis 200, vorzugsweise 10 bis 100, insbesondere 35 bis 60, hat, wobei die Oxyalkylensegmente - (CₙH₍₂ₙ₋ₘ₎R¹ₘO-) innerhalb eines Oxyalkylenetherrestes untereinander verschieden sein können, sowie die Reihenfolge der einzelnen Segmente -(CₙH₍₂ₙ₋ₘ₎R¹ₘO-) beliebig sein kann und insbesondere Blockcopolymere, statistische Polymere sowie deren Kombinationen umfasst.

Erfindungsgemäß bevorzugt sind Polyetherdiole, in denen Ethylenoxid (EO) und Propylenoxyd (PO) als Copolymerisate vorliegen. Besonders bevorzugt sind EO/PO-Copolymerisate, die blockartigen Aufbau besitzen und einen EO-Anteil von ca. 30 bis 70 Gew.-%, bezogen auf den Gesamtgehalt an Oxyalkyleneinheiten, enthalten.

Zur Sicherstellung erhöhter Lagerstabilität können die nach dem erfindungsgemäßen Verfahren hergestellten linearen SiOC-verknüpften Polyethersiloxane zudem noch mit kleinen Mengen organischer Amine, wie zum Beispiel N-Methylmorpholin, Triisopropanolamin oder Triethanolamin versetzt werden. Dies entspricht einer bevorzugten Ausführungsform der Erfindung.

Eine besonders empfindliche und aussagekräftige Bewertung der erfindungsgemäßen Verbindungen ermöglicht der anwendungstechnische Test, bei dem das gewonnene Copolymer als Schaumstabilisator in Polyurethanformulierungen zur Herstellung von insbesondere Etherschäumen oder offenzelligen Hartschäumen eingebracht wird. Strukturelle Defizite im Schaumstabilisator geben sich bei der Verschäumung in technisch unzureichendem Verhalten, also beispielsweise Schrumpf bzw. Kollaps, zu erkennen.

Die Herstellung der nach dem erfindungsgemäßen Verfahren beanspruchten SiOC-verknüpften, linearen Polydimethylsiloxan-Polyoxyalkylen-Blockcopolymeren kann wahlweise mit oder ohne den Einsatz eines geeigneten Lösungsmittels erfolgen. Werden hochmolekulare und damit einhergehend hochviskose SiOC-verknüpfte Copolymere angestrebt, so kann deren Herstellung im Sinne ihrer guten Handhabbarkeit während und nach der Synthese zweckmäßigerweise durch die Umsetzung des jeweiligen Polyetherdiols mit dem jeweiligen a,ω-Acetoxysiloxan in einem geeigneten Lösungsmittel stattfinden. Geeignete Solventien sind Alkane, Cycloalkane, Alkylaromaten, endverschlossene Polyether aber auch Emollientester wie Myristylmyristat u.ä., wobei insbesondere hochsiedende Lösungsmittel mit Siedepunkten > 120°C bevorzugt sind.

Es konnte von den Erfindern gefunden werden, dass man die zügige und vollständige Umsetzung der vorbehandelten α,ω-Diacetoxypolydimethylsiloxanen mit Polyetherdiolen unter Vermeidung von Verfärbungen des Reaktionsproduktes insbesondere in Gegenwart von Ammoniak durchführt. Der Einsatz von Ammoniak, sowohl in Schritt (a) (entspricht Vorbehandlung) als auch in Schritt (b) (entspricht Umsetzung mit Polyetherdiolen) entspricht einer ganz besonders bevorzugten Ausführungsform der Erfindung.

Die Reaktion in Schritt (b) (entspricht Umsetzung mit Polyetherdiolen) wird gemäß einer bevorzugten Ausführungsform der Erfindung bei Temperaturen zwischen vorzugsweise 20 und 70°C über die Dauer von vorzugsweise 1 bis 3 Stunden durchgeführt.

Eine weitere erfindungsgemäß bevorzugte Ausführungsform sieht vor, in dem zur Verknüpfung vorgesehenen Polyetherol respektive Polyetherolgemisch bereits unter Rühren Base(n) vorzulegen, bevor man das erfindungsgemäß vorbehandelte α,ω-Diacetoxy-polydimethylsiloxan hinzufügt. Diese Reaktion wird gemäß einer bevorzugten Ausführungsform der Erfindung vorzugsweise bei Temperaturen zwischen 50 bis 90°C und vorzugsweise über die Dauer von 2 bis 6 Stunden durchgeführt.

Überraschenderweise wurde darüber hinaus gefunden, dass die erfindungsgemäß unter Einsatz vorbehandelter α,ω-Diacetoxy-polydimethylsiloxan hergestellter Polyethersiloxane eine überaus gute Lagerstabilität besitzen. Als Kriterium zur Bewertung der Lagerstabilität der im Rahmen der erfinderischen Lehre hergestellten SiOC-verknüpften Polyethersiloxane wird bei konstant gewählter Lagertemperatur durch Probenahme die Viskosität als Funktion der Zeit verfolgt, da sich hierin mögliche Abbau- und/ oder Aufbauprozesse empfindlich manifestieren.

Die Reaktionstemperatur zur Herstellung der erfindungsgemäßen Copolymeren sollte gemäß einer bevorzugten Ausführungsform bei 20°C bis 120°C, bevorzugt bei 20°C bis 70°C, liegen.

### Beispiele:

Die folgenden Beispiele dienen dem Fachmann allein zur Erläuterung dieser Erfindung und stellen keinerlei Beschränkung des beanspruchten Verfahrens dar. Die erfindungsgemäße Bestimmung der Wassergehalte erfolgt grundsätzlich mit der Karl-Fischer-Methode in Anlehnung an DIN 51777, DGF E-III 10 und DGF C-III 13a. Die ²⁹Si-NMR-Spektroskopie diente in allen Beispielen der Reaktionsverfolgung.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [δ(²⁹Si) = 0,0 ppm] gemessen.

Die Gaschromatogramme werden an einem GC-Gerät des Typs GC 7890B der Fa. Agilent Technologies
ausgestattet mit einer Säule vom Typ HP-1; 30m x 0,32mm ID x 0,25µm dF (Agilent Technologies Nr. 19091Z-413E) und Wasserstoff als Trägergas mit folgenden Parametern aufgenommen:
Detektor: FID; 310°C
Injektor: Split; 290°C
Mode: constant flow 2 mL/min
Temperaturprogramm: 60°C mit 8°C/min -150°C mit 40°C/min - 300°C 10 min.

Als Indikator für das Erreichen des Äquilibriergleichgewichtes wird der gaschromatographisch bestimmte Gesamtcylengehalt definiert als die Summe der D₄-, D₅-, D₆-Gehalte bezogen auf die Siloxanmatrix und festgestellt nach der Derivatisierung der α,ω-Diacetoxypolydimethylsiloxane zu den entsprechenden α,ω-Diisopropoxy-polydimethylsiloxanen herangezogen. Die Derivatisierung zu den α,ω-Diisopropoxy-polydimethylsiloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxy-polydimethylsiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Die eingesetzten Polyetherdiole besitzen Wassergehalte von ca. 0,2 Massen-% und werden nach deren Vortrocknung verwendet. Eingesetztes Toluol respektive Alkylbenzol (C₁₀-C₁₃) besitzen einen Wassergehalt von 0,03 Massen-% und werden ohne Vortrocknung verwendet.

Die OH-Zahl der Polyetherdiole wird gemäß DGF C-V 17 a (53), beziehungsweise gemäß Ph. Eur. 2.5.3 Method A bestimmt, wobei man zunächst die Hydroxylgruppen der zu analysierenden Probe mit Essigsäureanhydrid in Gegenwart von Pyridin acetyliert und dann im Rahmen einer Differenztitration (Blindprobe, Berücksichtigung des Acetanhydridüberschusses) die freigesetzte Essigsäure als Verbrauch KOH in mg pro Gramm Polyetherdiol titriert.

### Beispiel 1:

Herstellung eines endäquilibrierten, Acetoxy-terminierten, linearen Polydimethylsiloxans

In einem 1000-ml-Vierhalskolben mit KPG-Rührer, Innenthermometer und aufgesetztem Rückflusskühler werden 77,3 g (0,757 mol) Essigsäureanhydrid zusammen mit 732,8 g (1,98 mol) Dekamethylcyclopentasiloxan (D₅) und 24,3 g Essigsäure (3,0 Gewichtsprozent bezogen auf die Gesamtmasse der Reaktanden) unter Rühren vorgelegt und mit 1,62 g (0,88 ml) Trifluormethansulfonsäure (0,2 Massenprozent bezogen auf den Gesamtansatz) versetzt und zügig auf 150°C erhitzt. Die zu Beginn leicht trübe Reaktionsmischung wird unter weiterem Rühren für 4 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 93% bezogen auf eingesetztes Essigsäureanhydrid belegt entsprechend einem α,ω-Diacetoxypolydimethylsiloxan mit einer mittleren Gesamtkettenlänge von ca. 14.

### Überführung des α,ω-Diacetoxypolydimethylsiloxans in das entsprechende α,ω-Diisopropoxypolydimethylsiloxan zur analytischen Charakterisierung

Unmittelbar nach der Synthese werden 50,0 g dieses trifluormethansulfonsauren, äquilibrierten α,ω-Diacetoxypolydimethylsiloxans in einem 250-ml-Vierhalsrundkolben ausgerüstet mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos, klare Flüssigkeit deren begleitendes ²⁹Si-NMR-Spektrum die quantitative Umwandlung des α,ω-Diacetoxypolydimethylsiloxans in ein α,ω-Diisopropoxypolydimethylsiloxan belegt.

Ein Aliquot dieses α,ω-Diisopropoxypolydimethylsiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt |
|---|---|---|---|---|
| 4,09 % | 2,62 % | 0,86 % | 7,57 % | 4,60 % |

### Beispiel 2 (erfindungsgemäß):

### a) Vorbehandlung des trifluormethansulfonsauren, endäquilibrierten α,ω-Diacetoxypolydimethylsiloxans

100 g des in Beispiel 1 hergestellten trifluormethansulfonsauren endäquilibrierten, Acetoxy-terminierten, linearen Polydimethylsiloxans werden bei 22°C für 30 Minuten in einem 250-ml-Vierhalskolben, ausgerüstet mit KPG-Rührer, Kontaktthermometer und Gaseinleitungsrohr unter Rühren mit einem mäßigen Ammoniakstrom beaufschlagt, wobei man eine Salzfällung beobachtet. Nach beendeter Gaseinleitung und Abstellen des Rührers wird eine Probe des klaren Überstandes entnommen und mit Hilfe der ²⁹Si-NMR-Analytik charakterisiert. Die Integralintensität über den für kurzkettige α,ω-Diacetoxysiloxane charakteristischen Signallagen haben verglichen mit dem ²⁹Si-NMR-Spektrum des nicht-vorbehandelten endäquilibrierten, Acetoxy-terminierten, linearen Polydimethylsiloxans deutlich abgenommen und repräsentieren in Summe nur noch ca. 27% der ursprünglich im Ausgangsspektrum in diesem Verschiebungsbereich auftretenden Si- gebundenen Acetoxygruppen. Berechnet man auf Basis der Integralintensitäten des neuen Spektrums die mittlere Kettenlänge, so beträgt sie ca. N = 15. Man trennt mit Hilfe eines Faltenfilters von den ausgefallenen Salzen ab und isoliert das α,ω-Diacetoxypolydimethylsiloxan.

### b) Umsetzung des aus a) resultierenden α,ω-Diacetoxypolydimethylsiloxans mit Polyetherdiol in Gegenwart von Ammoniak als Base

In einem 250-ml-Vierhalskolben, ausgerüstet mit KPG-Rührer, Kontaktthermometer und Wasserabscheider werden 56,1 g (0,02 mol) eines aus Ethylenoxid- und Propylenoxid-Einheiten aufgebauten Polyetherdiols einer mittleren Molmasse von ca. 2800 g/ mol und einem Propylenoxidanteil von 40 Massenprozent mit 91,3 g Toluol versetzt und bei 120°C azeotrop getrocknet. Nach dem Abkühlen werden 35,2 g (0,029mol) des aus dem Schritt a) stammenden α,ω-Diacetoxypolydimethylsiloxans hinzugegeben und dann wird bei 22°C unter Rühren im Laufe von 3 Stunden ein mäßiger Strom trockenen Ammoniaks eingeleitet. Anschließend werden die entstandenen Salze mit Hilfe einer Filterpresse abgetrennt. Das erhaltene klare Filtrat wird bei 150°C Sumpftemperatur und einem angelegten Hilfsvakuum von < 1 mbar am Rotationsverdampfer auf etwa 75% seines ursprünglichen Volumens eingeengt und dann mit 91,3 g eines Butanol-gestarteten, nur aus Propylenoxy-Einheiten bestehenden Polyetherols der mittleren Molmasse von 700 g/ mol beaufschlagt, bevor man die Destillation unter den zuvor gewählten Bedingungen solange fortsetzt, bis keinerlei Flüchtige mehr übergehen. Nach Erkalten wird ein klares, farbloses hochviskoses Material isoliert, dessen ²⁹Si-NMR-Spektrum quantitativen Umsatz belegt.

## Patentansprüche

1. Verfahren zur Herstellung von SiOC-verknüpften, linearen Polydimethylsiloxan-Polyoxyalkylen-Blockcopolymeren mit sich wiederholenden (AB)-Einheiten, umfassend folgende Schritte:
(a) Vorbehandlung saurer, vorzugsweise supersaurer, vorzugsweise trifluormethansulfonsaurer, endäquilibrierter α,ω-Diacetoxypolydimethylsiloxane mit einer Base und gegebenenfalls anschließende destillative Reinigung der zuvor Base behandelten α,ω-Diacetoxy-polydimethylsiloxane
(b) Umsetzung der aus (a) resultierenden α,ω-Diacetoxypolydimethylsiloxane mit Polyetherdiolen in Gegenwart einer festen, flüssigen oder gasförmigen Base, gegebenenfalls unter Einsatz inerter Lösungsmittel.

2. Verfahren gemäß Anspruch 1, **dadurch gekennzeichnet, dass** das molare Verhältnis von α,ω-Diacetoxypolydimethylsiloxanen zu Polyetherdiolen im Bereich von 0,90 bis 1,10, bevorzugt im Bereich 0,95 bis 1,05, ganz besonders bevorzugt im Bereich 0,99 bis 1,01 liegt.

3. Verfahren gemäß Anspruch 1 oder 2, **dadurch gekennzeichnet, dass** die Umsetzung der α,ω-Diacetoxypolydimethylsiloxane mit den Polyetherdiolen in Schritt (b) bei Temperaturen von 20°C bis 120°C, bevorzugt bei Temperaturen von 20°C bis 70°C durchgeführt wird.

4. Verfahren gemäß einem der Ansprüche 1 bis 3, **dadurch gekennzeichnet, dass** die einzusetzende Base Ammoniak umfasst, vorzugsweise Ammoniak ist, insbesondere in beiden Schritten (a) und (b).

5. Verfahren gemäß einem der Ansprüche 1 bis 4, **dadurch gekennzeichnet, dass** die Vorbehandlung des sauren endäquilibrierten α,ω-Diacetoxypolydimethylsiloxans in Schritt (a) mit Base, insbesondere Ammoniak, im Temperaturbereich von 0°C bis 50°C, bevorzugt zwischen 15°C bis 35°C durchgeführt wird.

6. Verfahren gemäß einem der Ansprüche 1 bis 5, **dadurch gekennzeichnet, dass** man die molare Mindestmenge eingesetzter Base, vorzugsweise Ammoniak, so bemisst, dass sie 1/20 bis 1/8 der molaren Menge Si-gebundener Acetoxygruppen im α,ω-Diacetoxypolydimethylsiloxan entspricht.

7. Verfahren gemäß einem der Ansprüche 1 bis 6, **dadurch gekennzeichnet, dass** als inerte Lösungsmittel Alkane, Cycloalkane, Alkylaromaten, endverschlossene Polyether und/oder Emollientester, wie den von Laurinsäure, Myristinsäure, Palmitinsäure, Stearinsäure, Ölsäure, Isostearinsäure, Ricinolsäure, und Behenilsäure hergeleiteten Estern kombiniert mit Cetyl-, Stearyl-, Isostearyl-, Oleyl-, Octyldodecyl-, Myristyl- und Behenyl-Alkohol und/oder Glyzerin, vorzugsweise Myristylmyristat, verwendet werden.

8. Verfahren gemäß einem der Ansprüche 1 bis 7 **dadurch gekennzeichnet, dass** das gewichtsmittlere Molekulargewicht jedes Siloxanblocks(A), (-(CH₃)₂SiO-)_{b}, zwischen 600 bis 6100 g/mol liegt.

9. Verfahren gemäß einem der Ansprüche 1 bis 8, **dadurch gekennzeichnet, dass** der Polyoxyalkylenblock(B), (-CₙH₍₂ₙ₋₁₎R¹ₘO-)_{c}, worin R¹ : Methyl- darstellt, gemischte Oxyethylen- und Oxypropyleneinheiten mit einem Oxyethylenanteil von 30 bis 70 Gewichtsprozent und 70 bis 30 Gewichtsprozent Oxypropylenanteil, bezogen auf den Gesamtgehalt an Oxyalkyleneinheiten im Block, enthält.

10. Verfahren gemäß einem der Ansprüche 1 bis 9, **dadurch gekennzeichnet, dass** das gewichtsmittlere Molekulargewicht bestimmt nach der in der Beschreibung angegebenen Methode jedes Polyoxyalkylenblocks(B), (CₙH₍₂ₙ₋₁₎R¹ₘO)_{c}, worin R¹ Methyl- darstellt, zwischen 600 und 10.000 g/mol liegt.

11. Verfahren gemäß einem der Ansprüche 1 bis 10, **dadurch gekennzeichnet, dass** der Anteil der Siloxanblöcke A im Gesamt-Copolymer zwischen 20 und 50, vorzugsweise zwischen 25 und 40 Gewichtsprozent beträgt.

12. Verfahren gemäß einem der Ansprüche 1 bis 11, **dadurch gekennzeichnet, dass** das Polydimethylsiloxan-Polyoxyalkylen-Blockcopolymer ein gewichtsmittleres Molekulargewicht bestimmt nach der in der Beschreibung angegebenen Methode von 10.000 g/mol bis 200.000 g/mol, vorzugsweise 25.000 g/mol bis 180.000 g/mol, insbesondere 40.000 g/mol bis 140.000 g/mol aufweist.

## Claims

1. Process for producing SiOC-bonded, linear polydimethylsiloxane-polyoxyalkylene block copolymers comprising repeating (AB) units, comprising the steps of:
(a) pretreating acidified, preferably superacid-acidified, preferably trifluoromethanesulfonic acid-acidified, end-equilibrated α,ω-diacetoxypolydimethylsiloxanes with a base and optional subsequent distillative purification of the α,ω-diacetoxypolydimethylsiloxanes previously treated with base
(b) reacting the α,ω-diacetoxypolydimethylsiloxanes resulting from (a) with polyether diols in the presence of a solid, liquid or gaseous base, optionally using inert solvents.

2. Process according to Claim 1, **characterized in that** the molar ratio of α,ω-diacetoxypolydimethylsiloxanes to polyether diols is in the range from 0.90 to 1.10, preferably in the range 0.95 to 1.05, very particularly preferably in the range 0.99 to 1.01.

3. Process according to Claim 1 or 2, **characterized in that** the reaction of the α,ω-diacetoxypolydimethylsiloxanes with the polyether diols in step (b) is performed at temperatures of 20°C to 120°C, preferably at temperatures of 20°C to 70°C.

4. Process according to any of Claims 1 to 3, **characterized in that** the base to be employed comprises ammonia, preferably is ammonia, especially in both steps (a) and (b).

5. Process according to any of Claims 1 to 4, **characterized in that** the pretreatment of the acidified end-equilibrated α,ω-diacetoxypolydimethylsiloxane in step (a) is performed with base, in particular ammonia, in the temperature range from 0°C to 50°C, preferably between 15°C to 35°C.

6. Process according to any of Claims 1 to 5, **characterized in that** the minimum molar amount of the employed base, preferably ammonia, is chosen such that it corresponds to 1/20 to 1/8 of the molar amount of Si-bonded acetoxy groups in the α,ω-diacetoxypolydimethylsiloxane.

7. Process according to any of Claims 1 to 6, **characterized in that** inert solvents employed are alkanes, cycloalkanes, alkylaromatics, end-capped polyethers and/or emollient esters, such as the esters derived from lauric acid, myristic acid, palmitic acid, stearic acid, oleic acid, isostearic acid, ricinoleic acid and behenic acid combined with cetyl, stearyl, isostearyl, oleyl, octyldodecyl, myristyl and behenyl alcohol and/or glycerol, preferably myristyl myristate.

8. Process according to any of Claims 1 to 7, **characterized in that** the weight-average molecular weight of each siloxane block (A), (-(CH₃)₂SiO-)_{b}, is between 600 to 6100 g/mol.

9. Process according to any of Claims 1 to 8, **characterized in that** the polyoxyalkylene block (B), (-CₙH₍₂ₙ₋₁₎R¹ₘO-)_{c}, wherein R¹ represents methyl, contains mixed oxyethylene and oxypropylene units having an oxyethylene proportion of 30 to 70 percent by weight and an oxypropylene proportion of 70 to 30 percent by weight based on the total content of oxyalkylene units in the block.

10. Process according to any of Claims 1 to 9, **characterized in that** the weight-average molecular weight, determined by the method specified in the description, of each polyoxyalkylene block (B), (CₙH₍₂ₙ₋₁₎R¹ₘO)_{c} wherein R¹ represents methyl is between 600 and 10 000 g/mol.

11. Process according to any of Claims 1 to 10, **characterized in that** the proportion of the siloxane blocks A in the total copolymer is between 20 and 50, preferably between 25 and 40, percent by weight.

12. Process according to any of Claims 1 to 11, **characterized in that** the polydimethylsiloxane-polyoxyalkylene block copolymer has a weight-average molecular weight, determined by the method specified in the description, of 10 000 g/mol to 200 000 g/mol, preferably 25 000 g/mol to 180 000 g/mol, in particular 40 000 g/mol to 140 000 g/mol.

## Revendications

1. Procédé de préparation de copolymères séquencés liés par SiOC, linéaires de polydiméthylsiloxane-polyoxyalkylène présentant des motifs récurrents (AB), comprenant les étapes suivantes :
(a) prétraitement d'α,ω-diacétoxypolydiméthylsiloxanes acides, de préférence superacides, de préférence acide trifluorométhanesulfonique, totalement équilibrés à l'aide d'une base et le cas échéant purification distillative consécutive des α,ω-diacétoxypolydiméthylsiloxanes préalablement traités à l'aide d'une base
(b) transformation des α,ω-diacétoxypolydiméthylsiloxanes résultant de (a) avec des polyétherdiols en présence d'une base solide, liquide ou gazeuse, le cas échéant avec utilisation de solvants inertes.

2. Procédé selon la revendication 1, **caractérisé en ce que** le rapport molaire des α,ω-diacétoxypolydiméthylsiloxanes aux polyétherdiols se situe dans la plage de 0,90 à 1,10, de préférence dans la plage de 0,95 à 1,05, de manière tout particulièrement préférée dans la plage de 0,99 à 1,01.

3. Procédé selon la revendication 1 ou 2, **caractérisé en ce que** la transformation des α,ω-diacétoxypolydiméthylsiloxanes avec les polyétherdiols dans l'étape (b) est effectuée à des températures de 20°C à 120°C, de préférence à des températures de 20°C à 70°C.

4. Procédé selon l'une des revendications 1 à 3, **caractérisé en ce que** la base à utiliser comprend de l'ammoniac, est de préférence de l'ammoniac, en particulier dans les deux étapes (a) et (b).

5. Procédé selon l'une des revendications 1 à 4, **caractérisé en ce que** le prétraitement du α,ω-diacétoxypolydiméthylsiloxane dans l'étape (a) à l'aide d'une base, en particulier de l'ammoniac, est effectué dans la plage de température de 0°C à 50°C, de préférence entre 15°C à 35°C.

6. Procédé selon l'une des revendications 1 à 5, **caractérisé en ce qu'**on dimensionne la quantité molaire minimale de base utilisée, de préférence l'ammoniac, de telle sorte qu'elle correspond à 1/20 jusqu'à 1/8 de la quantité molaire de groupes acétoxy liés par Si dans l'α,ω-diacétoxypolydiméthylsiloxane.

7. Procédé selon l'une des revendications 1 à 6, **caractérisé en ce qu'**on utilise, comme solvants inertes, des alcanes, des cycloalcanes, des alkylaromatiques, des polyéthers à terminaisons fermées et/ou des esters émollients, tels que les esters dérivés de l'acide laurique, myristique, palmitique, stéarique, oléique, isostéarique, ricinoléique et béhénylique, combinés avec l'alcool cétylique, stéarylique, isostéarylique, oléylique, octyldodécylique, myristylique et béhénylique et/ou le glycérol, de préférence le myristate de myristyle.

8. Procédé selon l'une des revendications 1 à 7, **caractérisé en ce que** la masse moléculaire moyenne en poids de chaque bloc siloxane (A), (-(CH₃)₂SiO-)_{b}, se situe entre 600 à 6100 g/mole.

9. Procédé selon l'une des revendications 1 à 8, **caractérisé en ce que** le bloc polyoxyalkylène (B), (-CₙH₍₂ₙ₋₁₎R¹ₘO-)_{c}, dans lequel R¹ : représente méthyle, contient des motifs mixtes d'oxyéthylène et d'oxypropylène présentant une proportion d'oxyéthylène de 30 à 70 % en poids et 70 à 30 % en poids de proportion d'oxypropylène, par rapport à la teneur totale en motifs d'oxyalkylène dans le bloc.

10. Procédé selon l'une des revendications 1 à 9, **caractérisé en ce que** la masse moléculaire moyenne en nombre, déterminée selon la méthode indiquée dans la description, de chaque bloc polyoxyalkylène (B), (CₙH₍₂ₙ₋₁₎R¹ₘO)_{c}, dans lequel R¹ représente méthyle, se situe entre 600 et 10.000 g/mole.

11. Procédé selon l'une des revendications 1 à 10, **caractérisé en ce que** la proportion de blocs siloxane A dans le copolymère total représente entre 20 et 50, de préférence entre 25 et 40 % en poids.

12. Procédé selon l'une des revendications 1 à 11, **caractérisé en ce que** le copolymère séquencé de polydiméthylsiloxane-polyoxyalkylène présente une masse moléculaire moyenne en poids, déterminée selon la méthode décrite dans la description, de 10.000 g/mole à 200.000 g/mole, de préférence de 25.000 g/mole à 180.000 g/mole, en particulier de 40.000 g/mole à 140.000 g/mole.
